(19) Europäisches Patentamt
European Patent Office
Office européen des brevets

(11) Veröffentlichungsnummer: **0 303 105 A2**

# (12) EUROPÄISCHE PATENTANMELDUNG

(21) Anmeldenummer: **88112107.3**

(51) Int. Cl.4: **C08G 18/20**

(22) Anmeldetag: **27.07.88**

(30) Priorität: **08.08.87 DE 3726426**

(43) Veröffentlichungstag der Anmeldung:
**15.02.89 Patentblatt 89/07**

(84) Benannte Vertragsstaaten:
**AT BE CH DE ES FR GB IT LI NL SE**

(71) Anmelder: **BAYER AG**

**D-5090 Leverkusen 1, Bayerwerk(DE)**

(72) Erfinder: **Hettel, Hans, Dr.**
**Jaegerstrasse 20**
**D-5064 Roesrath(DE)**
Erfinder: **Haas, Peter, Dr.**
**Zwengenberger Strasse 43**
**D-5657 Haan(DE)**
Erfinder: **Rabe, Hansjürgen**
**Am Domblick 20**
**D-5090 Leverkusen(DE)**

## (54) Verfahren zur Herstellung von Polyurethan-(harnstoff)-schaumstoffen.

(57) Polyurethan-(harnstoff)-schaumstoffen werden durch Umsetzung von Polyisocyanaten mit mindestens zwei gegenüber Isocyanaten aktive Wasserstoffatome aufweisenden Polyestern, Polycarbonaten, Polylactonen und/oder Polyamiden vom Molekulargewicht 400 bis 10.000 in Gegenwart von Wasser und/oder organischen Treibmitteln und in Gegenwart eines Katalysatorgemischs bestehend aus

a) Aminen der allgemeinen Formeln

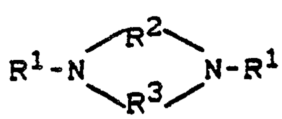

und/oder

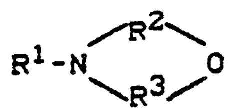

I

II

und/oder

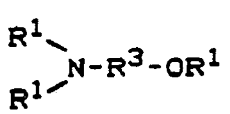

III

in denen
$R^1$ ein $C_1$-bis $C_6$-Alkylrest,
$R^2$ ein $(CH_2)_n$-Alkylenrest mit n = 2 bis 4
$R^3$ ein $(CH_2)_m$-Alkylenrest mit m = 2 bis 6
bedeutet,

b) Harnstoff und

EP 0 303 105 A2

c) metallorganischen Verbindungen, sowie gegebenenfalls in Gegenwart von Verbindungen mit mindestens zwei gegenüber Isocyanaten reaktionsfähigen Wasserstoffatomen und einem Molekulargewicht von 32 bis 399 und an sich bekannten oberflächenaktiven und flammhemmenden Zusatzstoffen und weiteren, an sich bekannten Hilfsmitteln hergestellt.

## Verfahren zur Herstellung von Polyurethan-(harnstoff)-schaumstoffen

Die Mitverwendung von Harnstoffen bei der Herstellung von Polyurethanen ist an sich bekannt (DE-OS 2 603 498, DE-OS 2 728 031, US-PS 44 81 308, US-PS 3 479 304, US-PS 2 975 146). Substituierte Harnstoffe werden als Aktivatoren in EP-PS 0 176 013, DE-OS 3 027 796, DE-OS 3 102 343, DE-OS 3 003 963, US-PS 4 242 467, DE-OS 2 843 739, JA 53 118 498, US-PS 4 094 827, GB-PS 1 463 809, DE-OS 2 354 952 und BE-PS 670 294 erwähnt. In der DE-OS 2 536 039 wird Harnstoff zur Verkürzung der Reaktionszeit bei der Herstellung von Polyetherurethanen und zur Verbesserung der Brandeigenschaften in Mengen von 3 -15 %, bezogen auf die Gesamtmenge der Reaktionskomponenten genannt.

Für die Herstellung von Polyurethan-Polyesterschaumstoffen sind jedoch Harnstoffderivate als Katalysatoren nicht geeignet, da sie zu einem starken Schrumpf führen, wie z.B. mit Produkten gemäß der EP-PS 0 176 013.

Harnstoff selbst ist für die Polyesterpolyurethane in seinem aktivierenden Potential zu schwach; die Reihe der Mono- bis Tetraalkylharnstoffe ist demgegenüber sogar noch inaktiver. Kombiniert man nun Harnstoff mit gängigen Aminen, um eine befriedigende Aktivierung zu erhalten, so resultiert bei vielen Aminen eine starke Geschlossenzelligkeit oder aber eine starke Tendenz zur Kernverfärbung; außerdem gibt es geruchliche Probleme.

Dies ist für eine technische Nutzung hinderlich. Aufgabe der vorliegenden Erfindung ist es also, ein Katalysatorsystem für die Herstellung von Polyesterschaumstoffen zu finden, welches

a) offenzellige Schaumstoffe und

b) Schaumstoffe ohne Tendenz zur Kernverfärbung auch bei niedrigen Rohdichten sowie

c) geruchsfreie Schaumstoffe ergibt.

Überraschend wurde nun gefunden, daß die Lösung dieses Problems durch eine Kombination von Harnstoff mit speziellen Aminen und mit metallorganischen Verbindungen als Katalysatoren gelingt.

Gegenstand der Erfindung ist ein Verfahren zur Herstellung von Polyurethan-(harnstoff)-schaumstoffen durch Umsetzung von Polyisocyanaten mit mindestens zwei gegenüber Isocyanaten aktive Wasserstoffatome aufweisenden Polyestern, Polycarbonaten, Polylactonen und/oder Polyamiden vom Molekulargewicht 400 bis 10.000 in Gegenwart von Wasser und/oder organischen Treibmitteln und in Gegenwart von Katalysatoren, gegebenenfalls in Gegenwart von Verbindungen mit mindestens zwei gegen über Isocyanaten reaktionsfähigen Wasserstoffatomen und einem Molekulargewicht von 32 bis 399, sowie an sich bekannten oberflächenaktiven und flammhemmenden Zusatzstoffen und weiteren, an sich bekannten Hilfsmitteln, dadurch gekennzeichnet, daß als Katalysator ein Gemisch bestehend aus

a) Aminen der allgemeinen Formeln

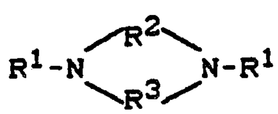

I

und/oder

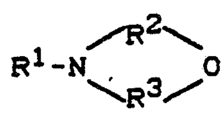

II

und/oder

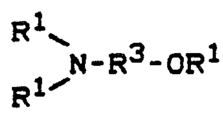

III

in denen

$R^1$ ein $C_1$- bis $C_6$-Alkylrest, bevorzugt Methyl,

$R^2$ ein $(CH_2)_n$-Alkylenrest mit n = 2 bis 4

$R^3$ ein $(CH_2)_m$-Alkylenrest mit m = 2 bis 6

bedeutet,

b) Harnstoff und

c) metallorganischen Verbindungen, verwendet wird.

Amine a) der allgemeinen Formeln I und II sind bevorzugt.

Erfindungsgemäß bevorzugte Amine a) sind speziell die Verbindungen

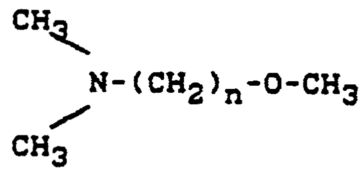

n = 2 oder 3

und

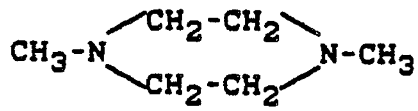

Erfindungsgemäß werden bevorzugt als metallorganische Katalysatoren Sn(II)- oder Sn(IV)-Salze höherer Carbonsäuren verwendet.

Ein besonders bevorzugtes erfindungsgemäßes Verfahren ist dadurch gekennzeichnet, daß 0,05 bis 0,6 Gew.-Tle, bevorzugt 0,1 bis 0,5 Gew.-Tle, besonders bevorzugt 0,2 bis 0,4 Gew.-Tle. Amine a), 0,1 bis 1,5 Gew.-Tle. Harnstoff und 0,01 bis 0,3 Gew.-Tle. metallorganische Verbindungen, bezogen auf 100 Gew.-Tle der mindestens zwei aktive Wasserstoffatome aufweisenden Polyester, Polycarbonate, Polylactone und/oder Polyamide vom Molekulargewicht 400-10000, verwendet werden.

Erfindungsgemäß werden ferner bevorzugt ethoxilierte Fettsäuren mit einem Ethoxigehalt von 1-10 Mol Ethylenoxid pro Mol Fettsäure als Emulgatoren mitverwendet.

Als erfindungsgemäße Amine a) seien genannt:

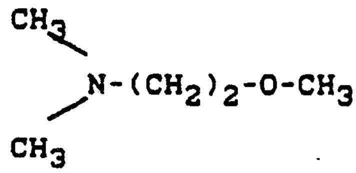

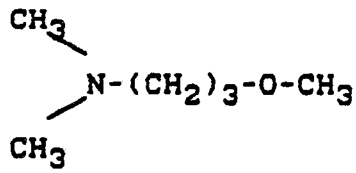

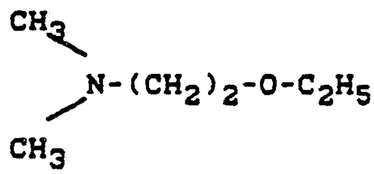

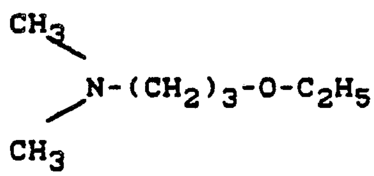

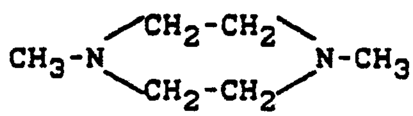

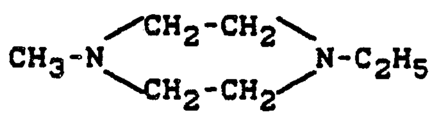

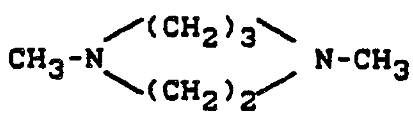

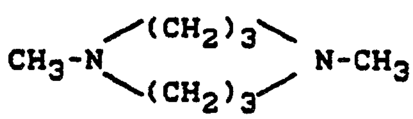

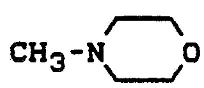

Als erfindungsgemäß bevorzugte Metallaktivatoren seien genannt:

$$[C_{17}H_{35}COO]_2\ Sn$$

$$[C_{17}H_{35}COO]_2\ Sn\ (CH_3)_2$$

$$[C_{17}H_{35}COO]_2\ Sn\ (C_4H_9]_2$$

$$[CH_3(CH_2)_3\text{-}\underset{\displaystyle C_2H_5}{\underset{|}{C}}H\text{-}COO]_2\ Sn$$

$$[CH_3\text{-}(CH_2)_3\text{-}\underset{\displaystyle C_2H_5}{\underset{|}{C}}H\text{-}COO]_2\ Sn\ (C_4H_9)_2$$

$$[C_{11}H_{23}COO]_2\ Sn$$

$$[C_{11}H_{23}COO]_2\ Sn\ (CH_3)_2$$

$$[C_{11}H_{23}COO]_2\ Sn\ (C_4H_9)_2$$

Der Effekt dieser Kombinationskatalyse in bezug auf Offenzelligkeit, Schaumstabilität und Kernverfärbung ist insofern überraschend, als bei Strukturabwandlung sofort ein Wirkungsabfall resultiert.

Verwendet man nämlich anstelle der Ether-Amine a) (allgemeine Formel III) das gewöhnlich verwendete Dimethyl-ethanolamin (DMEA), wird eine starke Tendenz zur Kernverfärbung beobachtet. Ver wendet man statt der cyclischen Amine a) mit der allgemeinen Formel I offenkettige Produkte oder deren Dimethylaminoalkylderivate (z.B. N-Methyl-N′-dimethylaminoethyl-piperazin), so entsteht ein völlig geschlossenzelliger Schaumstoff.

Die erfindungsgemäße Kombinationskatalyse erbringt gewerbehygienisch für die Polyesterpolyurethanherstellung enorme Vorteile. Erfindungsgemäß hergestellte Schaumstoffe sind sofort geruchsfrei und müssen daher nicht zur Ausdünstung gelagert werden. Nach dem Stand der Technik waren bisher zwei Tage Lagerung bis zur Geruchsfreiheit üblich.

Für die Herstellung der Polyurethan-(harnstoff)-schaumstoffe werden eingesetzt:

1. Als Ausgangskomponenten aliphatische, cycloaliphatische, araliphatische, aromatische und heterocyclischen Polyisocyanate, wie sie z.B. von W. Siefken in Justus Liebigs Annalen der Chemie, 562, Seiten 75 bis 136, beschrieben werden beispielsweise solche der Formel

$Q(NCO)_2$

in der
n = 2 - 4, vorzugsweise 2,
und
Q einen aliphatischen Kohlenwasserstoffrest mit 2 -18, vorzugsweise 6 - 10 C-Atomen,
einen cycloaliphatischen Kohlenwasserstoffrest mit 4 -15, vorzugsweise 5 - 10 C-Atomen,
einen aromatischen Kohlenwasserstoffrest mit 6 -15, vorzugsweise 6 - 13 C-Atomen,
oder einen araliphatischen Kohlenwasserstoffrest mit 8 -15, vorzugsweise 8 - 13 C-Atomen,
bedeuten, z.B. solche Polyisocyanate, wie sie in der DE-OS 2 832 253, Seiten 10 - 11, beschrieben werden. Besonders bevorzugt werden in der Regel die technisch leicht zugänglichen Polyisocyanate, z.B> das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6- Toluylendiisocyanat bzw. vom 4,4′-und/oder 2,4′-Diphenylmethandiisocyanat ableiten.

2. Ausgangskomponenten sind ferner Polyester, Polycarbonate, Polylactone und Polyamide mit mindestens zwei gegenüber Isocyanaten reaktionsfähigen Wasserstoffatomen und einem Molekulargewicht in der Regel von 400 - 10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis ach Hydroxylgruppen aufweisende Verbindungen, speziell solche vom Molekulargewicht 1.000 bis 8.000, vorzugsweise 2.000 bis 4.000, z.B. derartige mindestens, zwei, in der Regel 2 bis 5 vorzugsweise aber 2 bis 4, Hydroxylgruppen aufweisende Verbindungen, wie sie für die Herstellung von homogenen und von zellförmigen Polyurethanen an sich bekannt sind und wie z.B. in der DE-OS 2 832 253, Seiten 11 - 18, beschrieben werden.

Anteilig (bis zu 50 Gew.-%, bezogen auf Polyester, Polycarbonate, Polylactone und Polyamide) können auch mindestens zwei Hydroxylgruppen aufweisende Polyether vom Molekulargewicht 400 - 10.000 mitverwendet werden.

3. Wasser (bevorzugt) und/oder leicht flüchtige organische Substanzen.

4. Das erfindungsgemäße Katalysatorgemisch, bestehend aus a) den oben näher erläuterten Aminen, b) Harnstoff und c) metallorganischen Verbindungen.

Als metallorganische Verbindungen werden insbesondere organische Zinnverbindungen verwendet.

Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle diese Katalysatoren als Gemische eingesetzt werden.

5. Ausgangskomponenten sind ferner gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 -20, beschrieben.

6. Gegebenenfalls mitzuverwenden sind auch oberflächenaktive Zusatzstoffe, wie Emulgatoren und Schaumstabilisatoren. Als Emulgatoren sind solche auf Basis alkoxilierter Fettsäuren und höherer Alkohole bevorzugt.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat oder Ammoniumphosphat und -polyphosphat, ferner Stabilisa toren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966. z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im

Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel," wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekanntgeworden sind.

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. Anwendung als Automobilsitze, Polstermaterialien, Dämmstoffe, Beschichtungen oder als gummielastische Materialien.

## Ausführungsbeispiele

Herstellung der Amin-Katalysatoren a):

1. 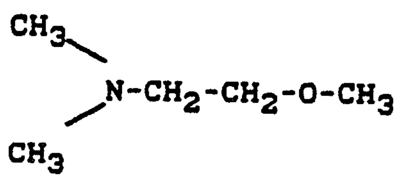

225 g Methoxyethylamin werden in 322 g Ameisensäure getropft, dann bei 90 °C langsam mit 700 ml 30 % Formalin versetzt und bis zum Abklingen der $CO_2$-Entwicklung auf Rückfluß belassen. Man stellt mit konz. Salzsäure auf pH 3, engt ein, stellt mit konz. Natronlauge alkalisch, trocknet und destilliert.
Ausbeute: 245 g, enspr. 80 % d.Th.
Kp: 102 °C

2. 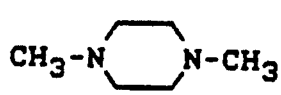

250 g Piperazin werden in 322 g Ameisensäure gegeben dann bei 90 °C langsam mit 700 ml 30 % Formalin versetzt und bis zum Abklingen der $CO_2$-Entwicklung auf Rückfluß belassen.

Man stellt mit konz. Salzsäure auf pH 3. engt ein, stellt mit konz. Natronlauge alkalisch, trocknet und destilliert.
Ausbeute: 290 g, entspr. 85 % d.Th.
Kp: 132 °C

3. 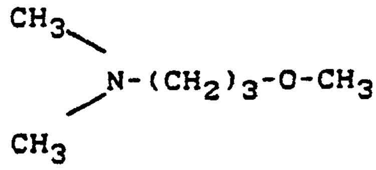

297 g Methoxypropylamin werden zu 322 g Ameisensäure getropft, dann bei 90°C langsam mit 700 ml 30 %igem wäßrigem Formaldehyd versetzt und bis zum Abklingen der $CO_2$-Entwicklung auf Rückfluß belassen. Man stellt mit Konz. Salzsäure auf pH 3, engt ein, stellt mit konz. Natronlauge alkalisch, trocknet und destilliert.
Ausbeute 300 g, entspr. 86 % d.Th.
Kp: 105°C

Verschäumungsbeispiele

Auf einer handelsüblichen UBT-Verschäumungsanlage (Hersteller: Hennecke GmbH, Birlinghoven, Bundesrep. Deutschland) wird ein Gemisch bestehend aus:

| | |
|---|---|
| 65,0 Gew.-Tlen | Polyesterpolyol einer OH-Zahl 60 (teilverzweigter Polyester auf Basis von Adipinsäure, Diethylenglykol und Trimethylolpropan) |
| 35,0 " | Polyesterpolyol einer OH-Zahl 215 (verzweigter Polyester auf Basis von Adipinsäure, Phthalsäure, Glycerin und Propylenglykol) |
| 5,0 " | Wasser |
| 2,0 " | Dispergiermittel (ethoxylierter und propoxylierter Fettalkohol) |
| 2,0 " | Emulgator (ethoxylierte Fettsäure) |
| 0,3 " | Silikonstabilisator SE 232 der BP |
| 0,1 " | Zinn(II)-octoat als Katalysator |
| 39 " | T80 (Toluylendiisocyanat, 80 Gew.-% 2,4-Isomeres, 20 Gew.-% 2,6-Isomeres) |
| 26 " | T65 (Toluylendiisocyanat, 65 Gew.-% 2,4-Isomeres, 35 Gew.-% 2,6-Isomeres) |

in üblicher Weise zu einem Polyesterweichblockschaumstoff verarbeitet.

Als Beschleuniger werden zusätzlich zum Zinn(II)-octoat folgende Aktivatorkombinationen eingesetzt:

| (Vergleichs) | Beispiel 4 | Beispiel 5 | Beispiel 6 |
|---|---|---|---|
| Harnstoff (Gew.-Tle) | 0,6 | 0,6 | 0,6 |
| Aminaktivator (Gew.-Tle) | 0,4 | 0,25 | 0,25 |
| Amintyp | DMEA | Beispiel 1 | Beispiel 2 |

Aus den Beispielen 4 - 6 resultieren stabile, nicht schrumpfende Polyesterschaumstoffe mit einer Rohdichte von 20 kg/m³ und einer Stauchhärte von 5 kPa, die nach dem Erkalten keinen Amingeruch aufweisen und daher nicht ausgedünstet werden müssen.

Der Schaumstoff gemäß Beispiel 4 weist eine deutliche Braunfärbung des Innenbereiches auf.

Die aus dem Beispiel 5 und 6 resultierenden Schaumstoffe zeigen demgegenüber keine Braunfärbungen des Innenbereiches.

**Ansprüche**

1. Verfahren zur Herstellung von Polyurethan-(harnstoff)-schaumstoffen durch Umsetzung von Polyisocyanaten mit mindestens zwei gegenüber Isocyanaten aktive Wasserstoffatome aufweisenden Polyestern, Polycarbonaten, Polylactonen und/oder Polyamiden vom Molekulargewicht 400 bis 10.000 in Gegenwart von

Wasser und/oder organischen Treibmitteln und in Gegenwart von Katalysatoren, gegebenenfalls in Gegenwart von Verbindungen mit mindestens zwei gegenüber Isocyanaten reaktionsfähigen Wasserstoffatomen und einem Molekulargewicht von 32 bis 399 sowie an sich bekannten oberflächenaktiven und flammhemmenden Zusatzstoffen und weiteren, an sich bekannten Hilfsmitteln, dadurch gekennzeichnet, daß als Katalysator ein Gemisch bestehend aus

a) Aminen der allgemeinen Formeln

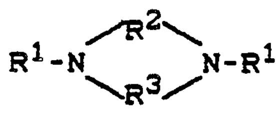

und/oder

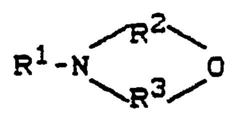

I

II

und/oder

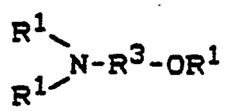

III

in denen

$R^1$ ein $C_1$- bis $C_6$-Alkylrest, bevorzugt Methyl,

$R^2$ ein $(CH_2)_n$-Alkylenrest mit n = 2 bis 4

$R^3$ ein $(CH_2)_m$-Alkylenrest mit m = 2 bis 6

bedeutet,

b) Harnstoff und

c) metallorganischen Verbindungen,

verwendet wird.

2. Verfahren nach Anspruch 1, dadurch gekennzeichnet, daß 0,05 bis 0,6 Gew.-Tle, bevorzugt 0,1 bis 0,5 Gew.-Tle, besonders bevorzugt 0,2 bis 0,4 Gew.-Tle. der Amine a), 0,1 bis 1,5 Gew.-Tle. Harnstoff und 0,01 bis 0,3 Gew.-Tle. metallorganischen Verbindungen, bezogen auf 100 Gew.-Tle der mindestens zwei aktive Wasserstoffatome aufweisenden Polyester, Polycarbonate, Polylactone und/oder Polyamide vom Molekulargewicht 400-10000, verwendet werden.

3. Verfahren nach Anspruch 1 und 2, dadurch gekennzeichnet, daß als Amine a) die Verbindungen

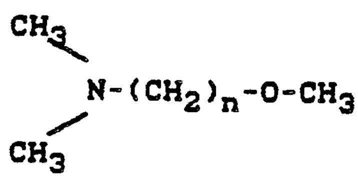

n = 2 oder 3

verwendet werden.

4. Verfahren nach Anspruch 1 und 2, dadurch gekennzeichnet, daß als Amin a) die Verbindung

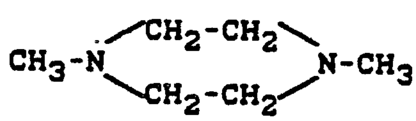

verwendet wird.

5. Verfahren nach Anspruch 1 bis 4, dadurch gekennzeichnet, daß als metallorganische Katalysatoren Sn(II)- oder Sn(IV)-Salze höherer Carbonsäuren verwendet werden.

6. Verfahren nach Anspruch 1 bis 5, dadurch gekennzeichnet, daß ethoxilierte Fettsäuren mit einem Ethoxigehalt von 1-10 Mol Ethylenoxid pro Mol Fettsäure als Emulgatoren mitverwendet werden.